# EUROPEAN PATENT APPLICATION

(11) **EP 2 256 400 A1**
(43) Date of publication of application: **01.12.2010**
(21) Application number: 09725865.1
(22) Date of filing: 25.03.2009
(51) Int. Cl.: F17C 11/00, B01J 3/02, C10L 3/06

(54) **METHOD AND APPARATUS FOR FORCING GAS-SOLID TWO-PHASE SUBSTANCE**

(30) Priority: 28.03.2008 JP 2008088640
(71) Applicant: Mitsui Engineering & Shipbuilding Co., Ltd., Chuo-ku Tokyo 104-8439 (JP)
(72) Inventor: MURAYAMA, Tetsuro, Ichihara-shi Chiba 290-8601 (JP); WATANABE, Shigeru, Tokyo 104-8439 (JP)
(74) Representative: WSL Patentanwälte
(86) International application number: PCT/JP2009/055884
(87) International publication number: WO 2009/119626

(57) **Abstract**

A method and an apparatus for forcing a gas-solid two-phase substance are provided in which the amount of a gas returning to an ordinary-pressure side can be reduced to reduce the consumption of power necessary for gas compression. A solid raw material (a) stored at ordinary pressure is forced into a high-pressure vessel via a switch valve (4) in the following manner. The raw material (a) is accommodated into a rotary valve element (7) disposed in the switch valve (4). Thereafter, an entrained gas (c) present in interstices of raw material (a) is replaced with an incompressible fluid (d).

## Description

### TECHNICAL FIELD

The present invention relates to a method and an apparatus for forcing a gas-solid two-phase substance in which a solid raw material stored in an ordinary pressure atmosphere is forced into a high-pressure vessel via a switch valve.

### BACKGROUND ART

In these days, there have been studied natural gas transportation systems for transporting natural gases overseas after artificially hydrating the natural gases. The natural gas transportation system mainly includes steps of generating, pelletizing, transferring, storing, and regasifying natural gas hydrates.

As a main usage of regasified natural gases, conceivable are fuels for power generation and raw materials for town gases. Fuels for power generation require a high pressure of 3.5 MPa or more, and raw materials for town gases require 5.0 MPa or more. An NGH (natural gas hydrate) has such a characteristic that a high-pressure gas is obtained without relying on power machinery, and thus can be subjected to high-pressure gasification (regasification) taking an advantage of such a characteristic.

However, it is not easy to continuously introduce NGH pellets stored in an ordinary-pressure atmosphere into a high-pressure regasifying tank. Examples of a system for pressure-feeding an NGH into a high-pressure regasifying tank include a ball valve batch system (see, for example, Patent Document 1) and a high-pressure seal-type rotary feeder system. In any of these systems, an NGH stored at ordinary pressure is pressure-fed into a high-pressure regasifying tank in either a batch or continuous manner. The systems have a structure in which the same volume of a high-pressure gas as that of an NGH accommodating chamber of the pressure feeder returns to an ordinary-pressure side when the ordinary-pressure side communicates with the NGH accommodating chamber of the pressure feeder.

Now, the ball valve batch system is taken as an example. An intermediate tank is provided between a storage tank and a regasifying tank, and valves in front and rear of this intermediate tank are opened and closed to intermittently introduce an NGH into the regasifying tank. However, in introducing the NGH into the regasifying tank, the intermediate tank is filled with a high-pressure gas in the regasifying tank. For this reason, the gas in the intermediate tank has to be returned to the regasifying tank by using a compressor or be released to the outside of the system to depressurize the intermediate tank before the subsequent reception of NGH from the ordinary-pressure side.

An NGH has a unique characteristic that an NGH includes a gas having a volume approximately 170 times (purity: 90%) the volume of the NGH of its own. This characteristic means that if an NGH is decomposed within a closed space, the pressure can be increased to a certain high pressure by the pressure of the generated gas therein. If the state of a gasification system is made close to this state, an ideal gasification not requiring pressure increase with a power unit is implemented.

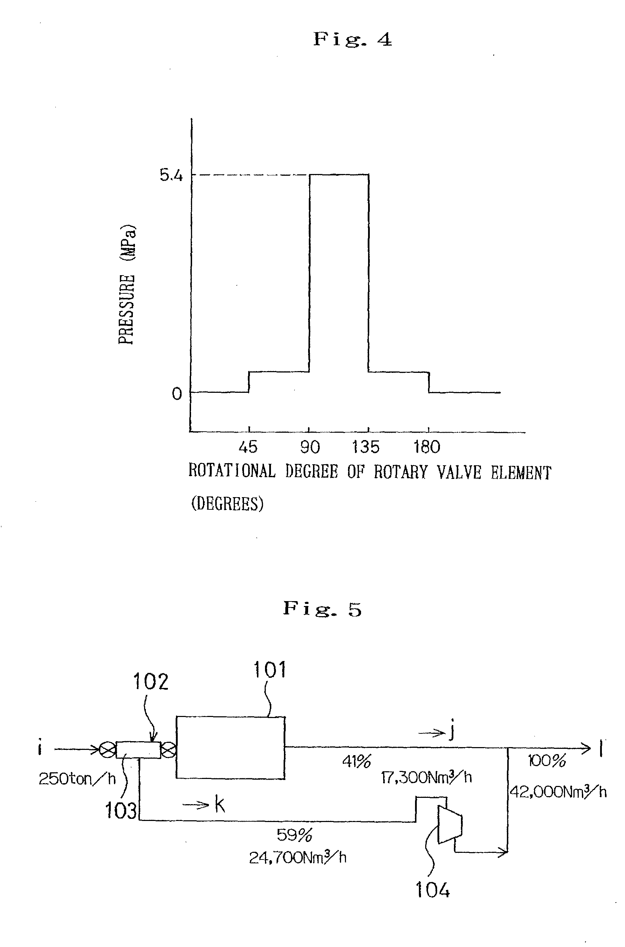

Assume that, as the conditions of pressure-feeding NGH pellets into a high-pressure system, for example, a high-pressure gasifying tank 101 is at 5 MPa and the pellet filling percentage in a pressure feeder 102 is 50%. In the conventional system (see Fig. 5), provided that a typical capacity of a pellet accommodating chamber 103 of the pressure feeder 102 is 1 m³, the pellet volume is 0.5 m³ based on the filling percentage of 50%. Similarly, the volume of an ordinary-pressure gas entrained with the pellets is also 0.5 m³. At one cycle of pellet pressure-feeding, a gas having a volume of 85 m³ is obtained, which is 170 times the pellet volume of 0.5 m³.

However, after the pressure-feeding, a gas at 5 MPa flows into the pellet accommodating chamber 103 having the 1-m³ volume of the pressure feeder 102. As a result, no less than 50 m³ of the gas is returned to the ordinary-pressure side. For this reason, approximately 59% (=50×100/85) of a whole amount of the high-pressure gas, which is supplied as fuels for power generation and raw materials for town gases needs to be compressed by a compressor 104. In Fig. 5, reference sign i denotes NGH pellets; j denotes a self high-pressure gas; k denotes a power-compressed gas; and 1 denotes a high-pressure gas to be supplied.

Accordingly, from the economical viewpoint, it is necessary to reduce the amount of a gas returning to the ordinary-pressure side as much as possible, and to reduce the consumption of power necessary for gas compression. Moreover, in the case of a rotary feeder system, since a rotor has multiple blades in a radial direction thereof, there is a problem that it is difficult to seal between the rotor and a casing.
Patent Document 1: Japanese patent application Kokai publication No. 2004-75849

### DISCLOSURE OF THE INVENTION

### PROBLEM TO BE SOLVED BY THE INVENTION

The present invention has been made based on the knowledge as described above. An object of the present invention is to provide a method and an apparatus for forcing a gas-solid two-phase substance which are capable of reducing the amount of a gas returning to the ordinary-pressure side as much as possible to reduce the consumption of power necessary for gas compression. Moreover, another object of the present invention is to provide an apparatus for forcing a gas-solid two-phase substance which allows relatively easy sealing between a rotor and a casing.

### MEANS FOR SOLVING THE PROBLEM

A method for forcing a gas-solid two-phase substance according to the present invention, in which a solid raw material stored at ordinary pressure is forced into a high-pressure vessel via a switch valve, is **characterized in that** a raw material is accommodated into a rotary valve element disposed in a switch valve, and thereafter an entrained gas present in the raw material is replaced with an incompressible fluid.

A method for forcing a gas-solid two-phase substance according to the present invention, in which a solid raw material stored at ordinary pressure is forced into a high-pressure vessel via a switch valve, is **characterized in that** a raw material is accommodated into a rotary valve element disposed in a switch valve, then an entrained gas present in the raw material is replaced with an incompressible fluid, and thereafter the raw material in the rotary valve element is forced into a high-pressure vessel by an incompressible fluid for transfer.

A method for forcing a gas-solid two-phase substance according to the present invention, in which a solid raw material stored at ordinary pressure is forced into a high-pressure vessel via a switch valve, is characterized by including: a raw-material accommodation step of accommodating a raw material into a rotary valve element disposed in a switch valve; a replacement step of replacing an entrained gas present in the raw material with an incompressible fluid; a row-material forcing step of forcing the raw material in the rotary valve element into a high-pressure vessel by an incompressible fluid for transfer; a discharge step of discharging the incompressible fluid remaining in the rotary valve element to the outside of the rotary valve element; and a returning step of returning the rotary valve element to a position corresponding to a raw-material introducing portion.

An apparatus for forcing a gas-solid two-phase substance according to the present invention, in which a solid raw material stored at ordinary pressure is forced into a high-pressure vessel via a switch valve, is **characterized in that** the switch valve is formed of: an valve body in an outer shell form; and a rotary valve element which is rotatably provided inside the valve body and which includes a through-hole portion for accommodating a raw material thereinto, and further
the valve body includes: a raw-material introducing portion; an incompressible-fluid supply portion and an entrained-gas discharge portion for replacing an entrained gas present in the raw material with an incompressible fluid; a raw-material discharge portion for discharging the raw material together with an incompressible fluid to be transferred in the rotary valve element to a high-pressure vessel; an incompressible-fluid discharge portion for discharging the incompressible fluid remaining in the rotary valve element to an outside of the rotary body; and a leak-fluid discharge portion for discharging, to the outside of the valve body, the incompressible fluid leaking into the valve body.

The apparatus for forcing a gas-solid two-phase substance according to the present invention is **characterized in that** a perforated plate for preventing outflow of the raw material is provided at least to each of the incompressible-fluid discharge portion and the leak-fluid discharge portion, among the entrained-gas discharge portion, the incompressible-fluid discharge portion, leak-fluid discharge portion, and the incompressible-fluid supply portion.

The apparatus for forcing a gas-solid two-phase substance according to the present invention is **characterized in that** a perforated plate for preventing outflow of the raw material is provided to each of the entrained-gas discharge portion, the incompressible-fluid discharge portion, the leak-fluid discharge portion, and the incompressible-fluid supply portion.

The apparatus for forcing a two-phase substance according to the present invention is **characterized in that** the rotary valve element is formed into any one of a spherical shape and a cylindrical shape.

The apparatus for forcing a two-phase substance according to the present invention is **characterized in that** a central portion of the through-hole portion has a diameter larger than diameters of openings located on both ends of the through-hole portion.

### EFFECTS OF THE INVENTION

According to the method of the present invention, a gas-solid two-phase substance is forced in the following manner. Specifically, when a solid raw material stored at ordinary pressure is forced into the high-pressure vessel via the switch valve, the raw material is accommodated into the rotary valve element disposed in the switch valve. Thereafter, an entrained gas present in the raw material is replaced with an incompressible fluid. This makes it possible to prevent a high-pressure gas in the high-pressure vessel from flowing into the rotary valve element of the switch valve at the time of feeding out of the raw material. Thus, it becomes possible to prevent the high-pressure gas in the high-pressure vessel from returning to the ordinary-pressure side where a raw material is stored. Moreover, in the method of the invention, since the high-pressure gas in the high-pressure vessel can be prevented from flowing into the rotary valve element of the switch valve as described above, it is no longer necessary to return a gas existing in the switch valve into the high-pressure vessel by using a compressor. This allows reduction in the consumption of power necessary for gas compression.

Meanwhile, the apparatus of the present invention is an apparatus for forcing a gas-solid two-phase substance in which a solid raw material stored at ordinary pressure is forced into the high-pressure vessel via the switch valve. In the apparatus, the switch valve is formed of: the valve body in the outer shell form; and the rotary valve element which is rotatably provided inside the valve body and which includes the through-hole portion for accommodating the raw material thereinto. In addition, the valve body includes: the raw-material introducing portion; the incompressible-fluid supply portion and the entrained-gas discharge portion for replacing the entrained gas present in the raw material with the incompressible fluid; the raw-material discharge portion for discharging the raw material together with the incompressible fluid to be transferred in the rotary valve element to the high-pressure vessel; the incompressible-fluid discharge portion for discharging the incompressible fluid remaining in the rotary valve element to the outside of the rotary valve element; and the leak-fluid discharge portion for discharging, to an outside of the valve body, the incompressible fluid leaking into the valve body. This makes it possible to prevent the high-pressure gas in the high-pressure vessel from flowing into the rotary valve element of the switch valve at the time of feeding out of the raw material. Thus, it becomes possible to prevent the high-pressure gas in the high-pressure vessel from returning to the ordinary-pressure side where a raw material is stored.

Moreover, according to the apparatus of the present invention, since the high-pressure gas in the high-pressure vessel can be prevented from flowing into the rotary valve element of the switch valve as described above, it is no longer necessary to return a gas existing in the switch valve into the high-pressure vessel by using a compressor. This allows reduction in the consumption of power necessary for gas compression.

Moreover, the unit of the present apparatus has a simple structure in which the valve body in the outer shell form and the rotary valve element rotatably provided inside the valve body are formed, and furthermore in which the single through-hole portion for accommodating the raw material is provided in the rotary valve element. Accordingly, the present apparatus has a merit that sealing between the rotary valve element and the valve body is facilitated.

Furthermore, in the apparatus of the present invention, the perforated plate for preventing outflow of the raw material is provided at least to each of the incompressible-fluid discharge portion and the leak-fluid discharge portion, among the entrained-gas discharge portion, the incompressible-fluid discharge portion, the leak-fluid discharge portion, and the incompressible-fluid supply portion. This makes it possible to prevent outflow of the raw material at the time of switching of the switch valve. Furthermore, in the apparatus of the present invention, the central portion of the through-hole portion has the diameter larger than the diameters of the openings located on both ends of the through-hole portion. Accordingly, the present apparatus has a merit that the amount of the accommodated raw material is increased in comparison with a straight through-hole portion having a constant diameter.

### BRIEF DESCRIPTION OF THE DRAWINGS

[Fig. 1] Fig. 1 is an overall configuration diagram of a regasifying apparatus including an apparatus for forcing a gas-solid two-phase substance according to the present invention.
[Fig. 2] Fig. 2 is an enlarged cross-sectional view of a switch valve.
[Fig. 3] Figs. 3A to 3F are views for explaining the operations of the switch valve.
[Fig. 4] Fig. 4 is a graph illustrating the change in pressure inside the switch valve.
[Fig. 5] Fig. 5 is a diagram illustrating a conventional regasifying system.

### EXPLANATION OF REFERENCE NUMERALS

- 4: switch valve
- 7: rotary valve element
- a: raw material
- c: entrained gas
- d: incompressible fluid

### BEST MODE FOR CARRYING OUT THE INVENTION

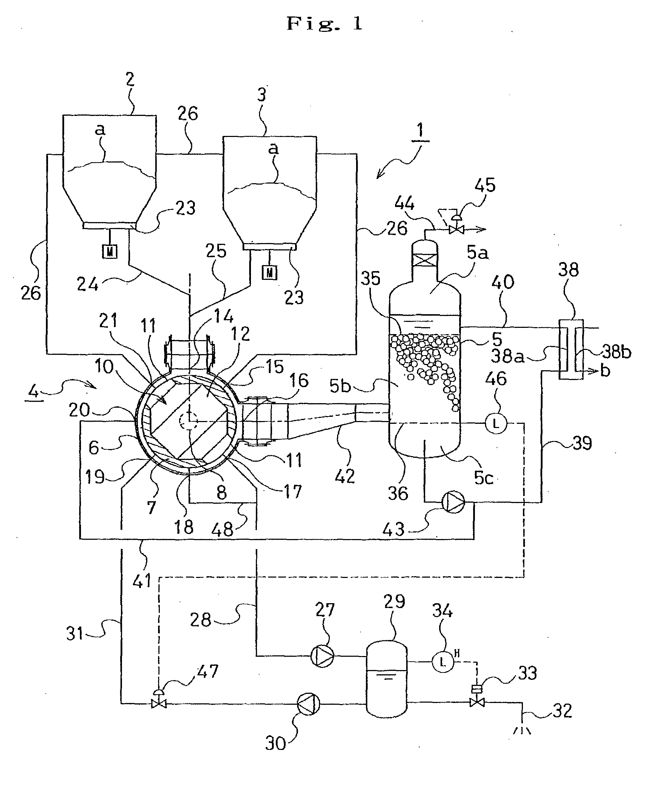

Hereinafter, an embodiment according to the present invention will be described with reference to the drawings. As shown in Fig. 1, a regasifying apparatus 1 of the present invention includes a set of first and second receiving bunkers 2 and 3, a switch valve 4 located therebelow, and a regasifying tank 5 located in the vicinity of the switch valve 4.

The switch valve 4 is formed of a hollow valve body 6 having a ball shape and a spherical rotary valve element 7 rotatably provided inside the valve body 6. Incidentally, the rotary valve element 7 may have a cylindrical shape. The rotary valve element 7 has rotary shafts 8 on both sides, and configured to rotate continuously in a clockwise direction in the drawing. However, the rotary valve element 7 may be configured to rotate every 45° intermittently.

The rotary valve element 7 includes a through-hole portion 10 for storing a raw material. The through-hole portion 10 includes openings 11 located on both ends of the through-hole portion 10 and a central cavity portion 12 having a diameter larger than diameters of the openings 11, aiming to increase the amount of raw material to be accommodated. Additionally, a sealing member (unillustrated) of the rotary valve element 7 is provided around the openings 11.

Meanwhile, the valve body 6 includes: a raw-material introducing portion 14; an entrained-gas discharge portion 15 for discharging an entrained gas present in interstices of a raw material to the outside of the rotary valve element; a raw-material discharge portion 16; an incompressible-fluid discharge portion 17 for discharging an incompressible fluid remaining in the rotary valve element to the outside of the rotary valve element; and a leak-fluid discharge portion 18 for discharging, to the outside of the valve body, an incompressible fluid leaking into the valve body.

Here, the raw-material introducing portion 14 is located at an upper end of the valve body 6 (at a position of 0°). The entrained-gas discharge portion 15 is located at an obliquely upper right portion of the valve body 6 (at a position of 45° with respect to the raw-material introducing portion 14). The raw-material discharge portion 16 is located at a right end of the valve body 6 (at a position of 90° with respect to the raw-material introducing portion 14). The incompressible-fluid discharge portion 17 is located at an obliquely lower right portion of the valve body 6 (at a position of 135° with respect to the raw-material introducing portion 14). The leak-fluid discharge portion 18 is located at a lower end of the valve body 6 (at a position of 180° with respect to the raw-material introducing portion 14).

The valve body 6 further includes: an incompressible-fluid supply portion 19 for replacement, the supply portion 19 located at a position opposed to the entrained-gas discharge portion 15; an incompressible-fluid supply portion 20 for transfer of a raw material, the supply portion 20 located at a position opposed to the raw-material discharge portion 16; and a low-pressure-gas supply portion 21 located at a position confronting the incompressible-fluid discharge portion 17.

The bunkers 2 and 3 include table feeders 23 at bottom portions thereof, respectively, to feed out a solid or pellet-form raw material a in the bunkers 2 and 3 alternately. Specifically, the solid or pellet-form raw material a discharged from the bunker 2 is supplied to the raw-material introducing portion 14 of the switch valve 4 through a pipe 24. The solid or pellet-form raw material a discharged from the bunker 3 is supplied to the raw-material introducing portion 14 of the switch valve 4 through a pipe 25. In addition, the entrained-gas discharge portion 15, the low-pressure-gas supply portion 21, and the two bunkers 2 and 3 communicate with each other through a pipe 26.

The incompressible-fluid discharge portion 17 is connected to an upper portion of a longitudinal atmospheric seal drain tank 29 through a pipe 28 including a drain pump 27. The incompressible-fluid supply portion 19 for replacement is connected to a lower portion of the atmospheric seal drain tank 29 through a pipe 31 that includes a water replacement pump 30. The seal drain tank 29 includes a drain pipe 32 for discharging excess water. A control valve 33 provided to the drain pipe 32 is controlled by a level meter 34 provided to the seal drain tank 29.

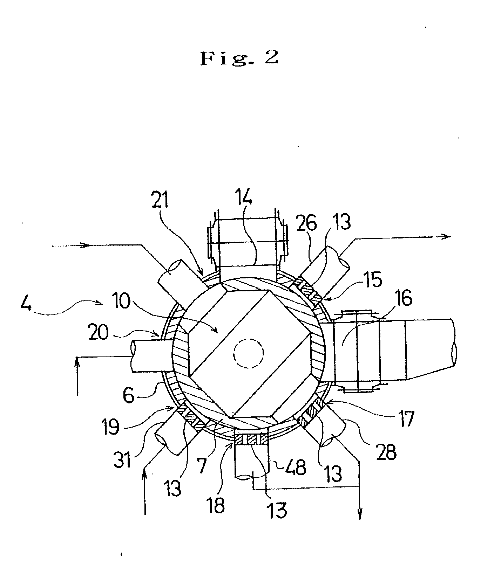

Furthermore, as shown in Fig. 2, perforated plates 13 for preventing the raw material a from flowing out are respectively provided to: the inlet of the pipe 26 connected to the entrained-gas discharge portion 15, the inlet of the pipe 28 connected to the incompressible-fluid discharge portion 17, the inlet of a pipe 48 connected to the leak-fluid discharge portion 18, and the outlet of the pipe 31 connected to the incompressible-fluid supply portion 19.

Moreover, if desired, the perforated plates 13 may be provided only to the inlet of the pipe 48 connected to the leak-fluid discharge portion 18 and the inlet of the pipe 28 connected to the incompressible-fluid discharge portion 17. Hence, such provision poses substantially no trouble. Note that any perforated plate can be used as long as outflow of the raw material a can be prevented and passage of the incompressible fluid is allowed.

A pair of upper and lower net-like members 35 and 36 divide the inside of the regasifying tank 5 into three portions: the central part serves as a raw-material reservoir 5b; the upper part serves as a gas reservoir 5a; and the lower part serves as a water reservoir 5c. Outside the regasifying tank 5, a heat exchanger 38 is provided. A pipe 39 is connected to one end of a heat conducting portion 38a that is one portion of the heat exchanger 38 and a tip end of the pipe 39 is inserted into the water reservoir 5c of the regasifying tank 5. A pipe 40 connected to the other end of the heat conducting portion 38a is connected to a side surface of the regasifying tank 5 in a way that a tip end of the pipe 40 is located above the upper net-like member 35. Another heat conducting portion 38b of the heat exchanger 38 is supplied with sea water b as a heat source.

A branch pipe 41 is branched from the pipe 39 connected to the heat conducting portion 38a of the heat exchanger 38. The branch pipe 41 is connected to the incompressible-fluid supply portion 20 for transfer of a raw material. A pipe 42 is provided to the raw-material discharge portion 16 and connected to the raw-material reservoir 5b of the regasifying tank 5. Moreover, at the upstream side of the branching point of the branch pipe 40, a pellet-feeding pump 43 also serving as a main pump is provided to the pipe 39 connected to the heat conducting portion 38a of the heat exchanger 30.

Furthermore, a gas supply pipe 44 connected to the top portion of the regasifying tank 5 is provided with a pressure adjusting valve 45. Moreover, a level meter 46 is provided at a position of the lower net-like member 36 so as to control a valve 47 provided to the pipe 31. Note that the leak-fluid discharge portion 18 communicates with the pipe 28 including the drain pump 27 via the pipe 48.

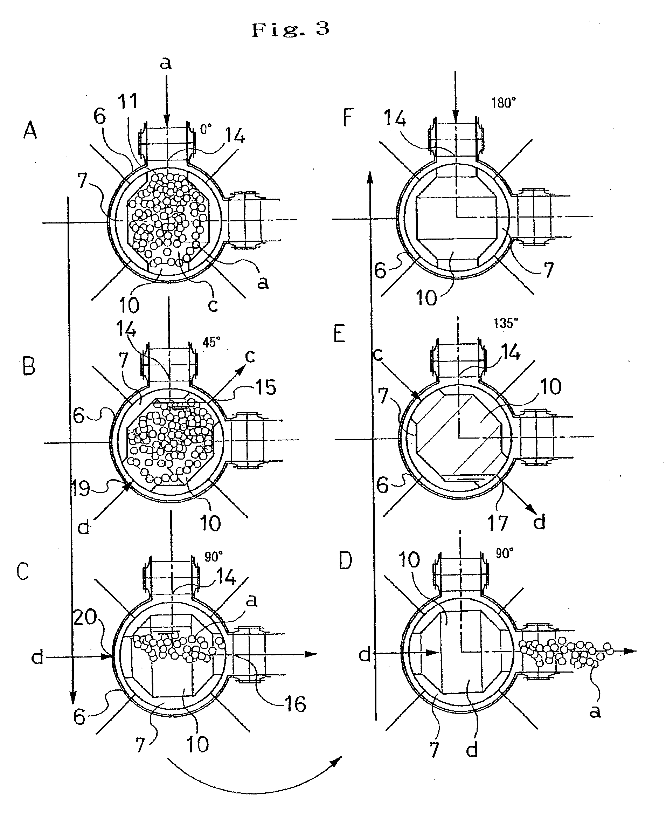

Next, the operations of the switch valve will be described with reference to Fig. 3A to Fig. 3F. While the opening 11 of the through-hole portion 10 of the rotary valve element 7 meets the raw-material introducing portion 14 of the valve body 6 (in a state where the through-hole portion 10 of the rotary valve element 7 is at 0° with respect to the raw-material introducing portion 14 of the valve body 6), the table feeder 23 for the first receiving bunker 2 is operated. Accordingly, NGH pellets a of the raw material are introduced into the through-hole portion 10 of the rotary valve element 7 as shown in Fig. 3A.

At this point, the NGH pellets a and an entrained gas c exist in the through-hole portion 10 of the rotary valve element 7, and the pressure is an ordinary pressure (see Fig. 4). Note that the drain pump 27, the water replacement pump 30, and the pellet feeding pump 43 are operated in advance.

Next, the rotary valve element 7 is rotated clockwise. When the through-hole portion 10 of the rotary valve element 7 is at 45° with respect to the raw-material introducing portion 14 of the valve body 6, the through-hole portion 10 of the rotary valve element 7 communicates with the incompressible-fluid supply portion 19 and the entrained-gas discharge portion 15. Thereby, an incompressible fluid (for example, water) d for replacement is introduced from the incompressible-fluid supply portion 19 into the through-hole portion 10 of the rotary valve element 7.

Thus, the entrained gas c in the through-hole portion 10 of the rotary valve element 7 is replaced with the incompressible fluid d (see Fig. 3B). At this point, the perforated plate 13 prevents outflow of the NGH pellets a. The entrained gas c expelled from the through-hole portion 10 of the rotary valve element 7 is returned to the bunkers 2 and 3 from the entrained-gas discharge portion 15.

The rotary valve element 7 is further rotated clockwise. When the through-hole portion 10 of the rotary valve element 7 is at 90° with respect to the raw-material introducing portion 14 of the valve body 6, the inside of the through-hole portion 10 of the rotary valve element 7 communicates with the regasifying tank 5, and instantaneously highly pressurized (see Fig. 3C and Fig. 4). The pressure of the regasifying tank 5 is controlled by the pressure adjusting valve 45, and the regasifying tank 5 has a high pressure, for example, 5 MPa.

While the pressure is controlled, the through-hole portion 10 of the rotary valve element 7 communicates with incompressible-fluid supply portion 20 for transfer and the raw-material discharge portion 16. Then, the NGH pellets a are discharged from the through-hole portion 10 of the rotary valve element 7 by a water stream deriving from the pellet feeding pump 43, and supplied to the regasifying tank 5. After the NGH pellets a are discharged, only the incompressible fluid d remains in the through-hole portion 10 of the rotary valve element 7 (see Fig. 3D).

The rotary valve element 7 is further rotated clockwise. When the through-hole portion 10 of the rotary valve element 7 is at 135° with respect to the raw-material introducing portion 14 of the valve body 6, the through-hole portion 10 of the rotary valve element 7 communicates with the drain pump 27. Then, the incompressible fluid d in the through-hole portion 10 of the rotary valve element 7 is discharged, and the inside of the through-hole portion 10 of the rotary valve element 7 is replaced with an atmosphere of the entrained gas c (see Fig. 3E and see Fig. 4). Since water is incompressible, the pressure is instantaneously released with a small increase in capacity. During this, the perforated plate 13 prevents outflow of residual pellets.

The rotary valve element 7 is further rotated clockwise. When the through-hole portion 10 of the rotary valve element 7 is at 180° with respect to the raw-material introducing portion 14 of the valve body 6, the state returns to a state where pellets are ready to be received again (see Fig. 3F).

During these operations, when the sea water b as a heat source is supplied to the heat exchanger 38, the NGH pellets a in the regasifying tank 5 are thermally decomposed into a natural gas e and water d. Note that the present invention is applicable to continuous depressurization in a NGH production process, as well. Moreover, the present invention can be adopted in other gas-solid transferring, as well.

### EXAMPLE

Conceivable is a system in which regasified natural gas is supplied to gas-fired gas-turbine complex power generation facilities as a place of NGH utilization. Fuel gases necessary for power generation of 250 MW are approximately 42, 000 Nm³/h. If the pressure of an ordinary pressure gas is increased up to 5 MPa with a compressor, the power consumption is 15 MW by estimate. This power consumption (15 MW) is 6% of the amount of power generation (250 MW) and greatly influences the entire transportation system.

In the conventional batch system (see Fig. 5), the power consumption is 3.6% (9×100/250) of the amount of power generation (250 MW). However, since the conventional system is not a continuous input system, a time for opening and closing operations of front and rear valves is required, and the apparatus tends to be over-sized. In the conventional technique, the high-pressure gas within the space in the pressure feeder has to be mechanically compressed more or less. Accordingly, the power consumption is required.

In contrast, in the present invention, a gas in the continuously rotating valve element is replaced with water that is an incompressible fluid. Accordingly, the power for gas compression can be significantly reduced. The present invention requires no compression power. When the power for valve operations, pumps, and the like is 300 kW, the power consumption relative to the amount of power generation is 0.12% (0.3×100/250).

## Claims

1. A method for forcing a gas-solid two-phase substance in which a solid raw material stored at ordinary pressure is forced into a high-pressure vessel via a switch valve, the method **characterized in that**
a raw material is accommodated into a rotary valve element disposed in a switch valve, and
thereafter an entrained gas present in the raw material is replaced with an incompressible fluid.

2. A method for forcing a gas-solid two-phase substance in which a solid raw material stored at ordinary pressure is forced into a high-pressure vessel via a switch valve, the method **characterized in that**
a raw material is accommodated into a rotary valve element disposed in a switch valve,
then an entrained gas present in the raw material is replaced with an incompressible fluid, and
thereafter the raw material in the rotary valve element is forced into a high-pressure vessel by an incompressible fluid for transfer.

3. A method for forcing a gas-solid two-phase substance in which a solid raw material stored at ordinary pressure is forced into a high-pressure vessel via a switch valve, the method **characterized by** comprising:
a raw-material accommodation step of accommodating a raw material into a rotary valve element disposed in a switch valve;
a replacement step of replacing an entrained gas present in the raw material with an incompressible fluid;
a raw-material forcing step of forcing the raw material in the rotary valve element into a high-pressure vessel by an incompressible fluid for transfer;
a discharge step of discharging the incompressible fluid remaining in the rotary valve element to the outside of the rotary valve element; and
a returning step of returning the rotary valve element to a position corresponding to a raw-material introducing portion.

4. An apparatus for forcing a gas-solid two-phase substance in which a solid raw material stored at ordinary pressure is forced into a high-pressure vessel via a switch valve, the apparatus **characterized in that**
the switch valve is formed of: a valve body in an outer shell form; and a rotary valve element which is rotatably provided inside the valve body and which includes a through-hole portion for accommodating a raw material thereinto, and further,
the valve body includes:
a raw-material introducing portion;
an incompressible-fluid supply portion and an entrained-gas discharge portion for replacing an entrained gas present in the raw material with an incompressible fluid;
a raw-material discharge portion for discharging the raw material together with an incompressible fluid to be transferred in the rotary valve element to a high-pressure vessel;
an incompressible-fluid discharge portion for discharging the incompressible fluid remaining in the rotary valve element to an outside of the rotary valve element; and
a leak-fluid discharge portion for discharging, to the outside of the valve body, the incompressible fluid leaking into the valve body.

5. The apparatus for forcing a gas-solid two-phase substance according to claim 4, **characterized in that** a perforated plate for preventing outflow of the raw material is provided at least to each of the incompressible-fluid discharge portion and the leak-fluid discharge portion, among the entrained-gas discharge portion, the incompressible-fluid discharge portion, leak-fluid discharge portion, and the incompressible-fluid supply portion.

6. The apparatus for forcing a gas-solid two-phase substance according to claim 4, **characterized in that** a perforated plate for preventing outflow of the raw material is provided to each of the entrained-gas discharge portion, the incompressible-fluid discharge portion, the leak-fluid discharge portion, and the incompressible-fluid supply portion.

7. The apparatus for forcing a two-phase substance according to claim 4, **characterized in that** the rotary valve element is formed into any one of a spherical shape and a cylindrical shape.

8. The apparatus for forcing a two-phase substance according to claim 4, **characterized in that** a central portion of the through-hole portion has a diameter larger than diameters of openings located on both ends of the through-hole portion.
